# EUROPEAN PATENT SPECIFICATION

(11) **EP 0 630 839 B1**
(45) Date of publication and mention of the grant of the patent: **03.09.1997**
(21) Application number: 94304632.6
(22) Date of filing: 24.06.1994
(51) Int. Cl.: B65G 53/64

(54) **Sealing device**
Dichtungsvorrichtung
Dispositif avec joint

(30) Priority: 24.06.1993 GB 9313026
(43) Date of publication of application: 28.12.1994
(73) Proprietor: Clyde Pneumatic Conveying Ltd., Doncaster, DN2 4SE (BE)
(72) Inventor: Snowdon, Brian, GB-Doncaster DN2 4SE (GB)
(74) Representative: Harrison, Michael Robert

(56) References cited:
- AT-B- 282 918
- DE-A- 2 041 230
- DE-A- 2 044 236
- DE-A- 2 062 071

## Description

This invention relates to sealing devices and in particular to sealing devices for use with material handling systems, more particularly pneumatic delivery systems operating at reduced pressure. DE-A-2 041 230 discloses such a sealing device.

According to the present invention there is provided a sealing device according to claim 1.

Preferably the device includes, integrally connected to the neck portion and remote from the head portion, a relatively enlarged shoulder portion.

In one embodiment of the present invention, a sealing device is for sealing between two connected together components of a reduced pressure material handling system and the device is, in cross-section, of solid construction having an enlarged head portion connected to a relatively narrow neck portion, the latter being in turn connected to a somewhat enlarged shoulder portion.

In a second embodiment in accordance with the present invention, a sealing device is for location between three connected together components of a reduced pressure material handling system, the device in this case including the head and neck portions and further including a slot, extending from that end of the device remote from the head portion to a position within the head portion. This slot will, in use, accommodate the edge of one of the three components of the material handling system.

Preferably in any device in accordance with the present invention, the head portion is, when sealing cross-section, of circular shape except where it extends into the neck portion. In use, the sealing device will be located between two flanges of components being connected together, the flanges being shaped to accommodate the enlarged head portion of the sealing device.

The present invention will now be described, by way of examples only, and with reference to the accompanying drawings, in which:-
- Figure 1 is a diagramatic representation of a reduced pressure material handling system incorporating sealing devices in accordance with the present invention;
- Figure 2 is a further view, mainly in vertical section, of a vacuum hopper loading device forming part of the system of Figure 1;
- Figure 2A shows a further vacuum hopper loader for use in a system such as that shown in Figure 1;
- Figure 3 shows a first embodiment of a sealing device in accordance with the present invention, shown forming part of the loading device of Figure 2; and
- Figure 4 shows a second embodiment of a sealing device in accordance with the present invention, again forming part of the loading device of Figure 2.

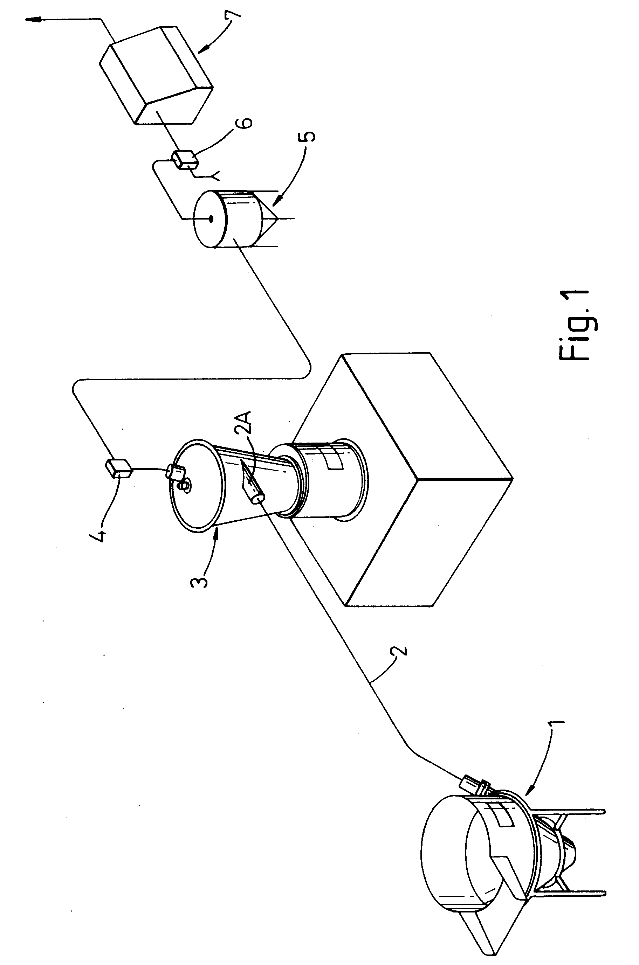

Referring to Figure 1 of the accompanying drawing a reduced pressure or vacuum material handling system includes a feed hopper 1 into which material to be conveyed is tipped from bags and transported through pipe 2 to a vacuum hopper loader 3 within which a vacuum is created by vacuum pump 7. Pump 7 is connected to hopper loader 3 by means of an air line and via vent valve 6, secondary filter 5 and vacuum select valve 4.

When it is required to convey material, the vacuum select valve 4 is opened and vent valve 6 closed creating a suction in the pipe 2 at the base of the feed hopper 1. Material and air are drawn into the vacuum hopper loader 3 until the level of material is just below the material entry point indicated at 2A. At this point, the vacuum select valve 4 closes and vent valve 6 opens, allowing air to be drawn from atmosphere and through the vacuum pump, which runs continuously.

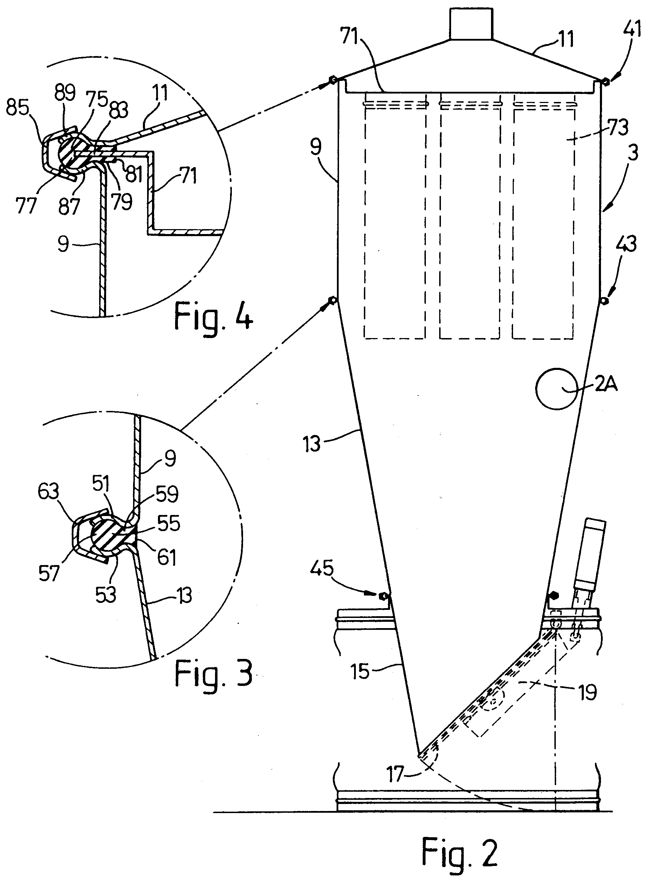

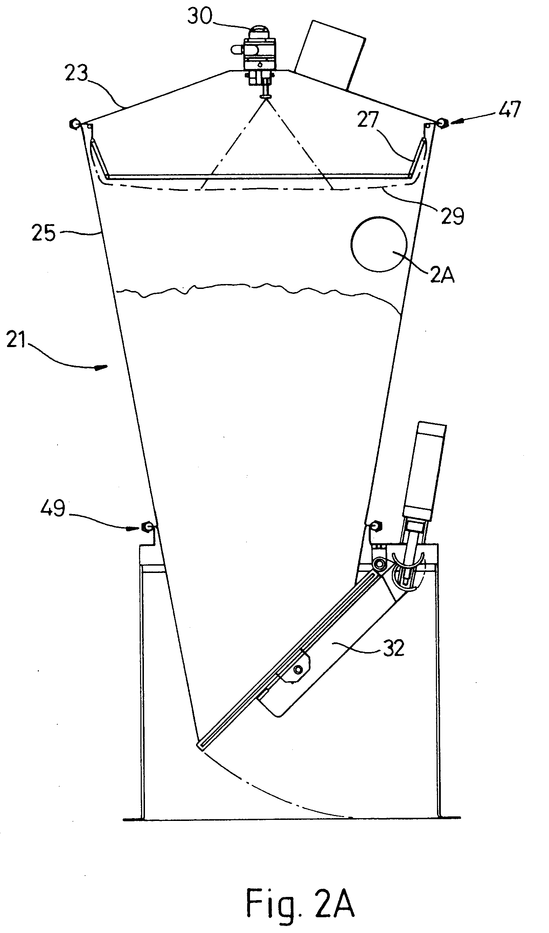

Vacuum hopper loader 3 is shown in more detail in Figure 2 and is in fact shown with an extra section 9 located between the top 11 and lower conical sections 13 and 15. A discharge flap 17 forming part of a valve 19 at the base of conical section 15 of the loader 3 is now opened and the material falls by gravity to the point of use. Flap valve 19 is then closed and the cycle repeated, if required, to refill vacuum hopper loader 3.

Referring now to Figure 2A of the accompanying drawings a vacuum hopper loader 21 is similar to that shown as 3 in Figure 2 except that the upper cylindrical member 9 is omitted. Located between top cover 23 and upper conical section 25 is a filter arrangement 27 including filter cloth 29. An air motor 30 is operated when bottom flap valve 32 is open and the material is being discharged. Air motor 10 causes vibration of the filter thereby clearing it of materials adhering to it.

It can be seen that the vacuum hopper loaders 3 and 21 of Figures 2 and 2A respectively include connected together sections, the connecting positions being indicated generally at 41, 43 and 45 for the loader of Figure 2 and at 47 and 49 for the loader of Figure 2A. At the connection position 43 of Figure 2, two loader sections are joined together and at each of the other connection positions of the loaders of Figures 2 and 2A, three sections are joined together.

Shown in Figure 3 is an enlarged view of the connection position between cylindrical section 9 and conical section 13 of the loader of Figure 2. It can be seen that each of sections 9 and 13 is provided with a shaped flange 51, 53 respectively. Between these flanges is located a resilient annular sealing device 55. Sealing device 55 may be formed of a relatively soft rubber or other suitable material. It is shaped so that, in cross-section, it has an enlarged head portion 57 and a relatively narrow neck portion 59 as well as a somewhat enlarged shoulder region 61, the latter being in fluid contact with the inside of the loader 3 which, in use, is subject to relatively low pressures. Enlarged head portion 57 lies between correspondingly curved portions of flanges 51 and 53 with its outer extremity in fluid communication with the outside of the loader 3 at atmospheric pressure. A ring clamp 63 is used to squeeze together flanges 51 and 53 about sealing device 55.

Referring now to Figure 4 of the accompanying drawings, there is shown the sealing connection 41 between three components of the loader 3, namely, top cover 11, cylindrical section 9 and filter support 71, from which filter devices 73 are suspended. Accordingly at this sealing connection three components of the loader are sealingly connected together. The sealing device 75 in accordance with the present invention is again formed of soft rubber and has, in section, an enlarged head portion 77, a relatively long neck portion 79, (compared with the length of neck portion 59 in the device shown in Figure 3) and a somewhat enlarged end shoulder portion 81. Extending from the centre of the end shoulder portion 81 in a direction towards and terminating at a central position within head portion 75 is a slot within which is located the edge 83 of filter support 71. As in the case of the sealing connection of Figure 3, a ring clamp 85 squeezes together the shaped flanges 87 and 89 of circular section 9 and top cover 11 of the loader. Sealing device 75 is thereby squeezed onto edge 83 of filter support 71 so that all three components of loader 3 are sealingly held together.

It should be appreciated that the novel shape of a sealing device in accordance with the present invention enables the sealing device to be used in a situation where there is a substantial reduction in pressure within the material handling system. The enlarged head portion of the sealing device together with the small gap between the various metal components being connected together, prevent the seal from being drawn into the vacuum hopper loader by the reduced pressure inside it. Vacuum levels of up to 80% vacuum create very high compression loads on the seal. For example, a vacuum hopper loader of diameter 80cm will have a compression load of 4 tonnes on the seal with 80% vacuum. A seal device in accordance with the present invention, having a relatively long radial width, that is to say length of rubber between the area of low pressure and atmospheric pressure, permits a relatively soft rubber seal to be used without excessive compression stresses.

A sealing device in accordance with the present invention is particularly useful for the food and pharmaceutical market where material handling hoppers are manufactured with smooth and crevice-free internal surfaces. It will be appreciated from Figures 3 and 4 that sealing devices in accordance with the present invention have compatible smooth and crevice-free internal surfaces.

In general, material handling systems, in which sealing devices of the present invention may be used, include systems used in the plastics, food and pharmaceutical industries for conveying relatively small quantities of powdered or granular material from a material feeding point, for example, from bags or drums to a point of use. A typical example might be a system for feeding material to a tablet press or to a blending processor. A component to such a system, such as the vacuum hopper loaders described above, may be formed of sections which may be formed of sections which are easily connected together and easily disassembled, at least partly due to the use of sealing devices in accordance with the present invention.

## Claims

1. A sealing device (55) for location between at least two connected together components (9, 13) of a reduced pressure material handling system, said device being made in one piece and formed of resilient material and extending, in use, between areas of relatively high and low pressure, characterised in that said device has a shape which, in cross-section, includes an enlarged head portion (57) integrally connected to a relatively narrow neck portion (59), the head portion being positioned, in use, remote from the relatively low pressure area.

2. A device according to Claim 1 in which the device includes, integrally connected to the neck portion and remote from the head portion, a relatively enlarged shoulder portion (61).

3. A sealing device according to Claim 1 or Claim 2 which is for location between three connected together components (9, 11, 71) of a reduced pressure material handling system, the device including a slot, extending from that end of the device remote from the head portion to a position within the head portion.

4. A reduced pressure material handling system including a sealing device according to any of the preceding claims.

## Patentansprüche

1. Dichtvorrichtung (55) zur Anordnung zwischen mindestens zwei miteinander verbundenen Komponenten (9,13) eines Unterdruck-Materialfördersystems, welche Vorrichtung in einem Stück hergestellt und aus einem elastischen Material geformt ist und sich bei ihrer Benutzung zwischen Bereichen mit relativ hohem und relativ niedrigem Druck erstreckt, **dadurch gekennzeichnet**, daß die Vorrichtung eine Form aufweist, welche im Querschnitt einen vergrößerten Kopfabschnitt (57) umfaßt, der einstückig mit einem relativ schmalen Halsabschnitt (59) verbunden ist, wobei der Kopfabschnitt bei der Benutzung entfernt von dem Bereich mit relativ niedrigem Druck angeordnet ist.

2. Vorrichtung nach Anspruch 1, welche weiterhin einen einstückig mit dem Halsabschnitt verbundenen und entfernt von dem Kopfabschnitt liegenden, relativ vergrößerten Schulterabschnitt (61) umfaßt.

3. Dichtvorrichtung nach den Ansprüchen 1 oder 2, welche zur Anordnung zwischen drei miteinander verbundenen Komponenten (9,11,71) eines Unterdruck-Materialfördersystems bestimmt ist, wobei die Vorrichtung einen Schlitz umfaßt, der sich von dem entfernt von dem Kopfabschnitt liegenden Ende der Vorrichtung bis zu einer Position innerhalb des Kopfabschnittes erstreckt.

4. Unterdruck-Materialfördersystem, welches eine Dichtvorrichtung gemäß einem der vorangehenden Ansprüche umfaßt.

## Revendications

1. Dispositif avec joint (55) pour une zone disposée entre au moins deux éléments (9,13) reliés ensemble, d'un système de manutention de matériau à basse pression, ledit dispositif étant formé d'une seule pièce et formé d'un matériau élastique et s'étendant, en cours d'utilisation, entre des zones de relativement haute et basse pression, caractérisé en ce que ledit dispositif présente une forme qui, en section droite, inclut une partie (57) élargie en forme de tête reliée et venue d'une pièce avec une partie (59) relativement étroite et formant un cou, la partie en forme de tête étant disposée, en cours d'utilisation, à l'opposé de la zone de relative basse pression.

2. Dispositif selon la revendication 1, caractérisé en ce qu'il comporte, reliée et venue d'une pièce avec la partie en forme de cou et à l'opposé de la partie en forme de tête, une partie (61) relativement élargie en forme d'épaulement.

3. Dispositif selon la revendication 1 ou 2, destiné à être disposé entre trois composants (9, 11, 71) reliés ensemble d'un système de manutention de matériau à pression réduite, le dispositif comprenant une fente s'étendant depuis ladite extrémité du dispositif éloigné de la partie en forme de tête vers un emplacement à l'intérieur de la portion en forme de tête.

4. Système de manutention de matériau à pression réduite incluant un dispositif avec joint selon l'une des revendications précédentes.
